# DEMANDE DE BREVET EUROPEEN

(11) **EP 1 577 175 A1**
(43) Date de publication de la demande: **21.09.2005**
(21) Numéro de dépôt: 05290526.2
(22) Date de dépôt: 08.03.2005
(51) Int. Cl.: B60R 21/34

(54) **Dispositif d'absportion d'un choc subi par le capot d'un véhicule**

(30) Priorité: 17.03.2004 FR 0402761
(71) Demandeur: Oxford Automotive Mecanismes et Decoupage Fin, 78997 Elancourt Cedex (FR)
(72) Inventeur: Guillerot, Thierry, 91190 Gif sur Yvette (FR)
(74) Mandataire: Neyret, Daniel Jean Marie

(57) **Abrégé**

Dispositif d'absorption d'un choc subi par le capot (2) d'un véhicule, ledit dispositif comportant des moyens pour dégager l'axe d'articulation (3) du capot (2) hors de son support (4) lors de la détection d'un choc ou de l'imminence d'un choc contre le capot (2), caractérisé en ce qu'il comporte au moins un élément élastique (5) qui, lorsque le capot (2) est ouvert par l'utilisateur, sert de moyens d'assistance à cette ouverture et, après que le capot (2) a dépassé un point d'équilibrage, entraîne la poursuite de l'ouverture puis le maintien du capot (2) en position ouverte sans action manuelle de l'utilisateur, et qui, lorsque le capot (2) a été éjecté hors de son support (4), participe à l'absorption dudit choc, une extrémité dudit élément élastique (5) étant articulée sur la carrosserie (1) du véhicule et l'autre extrémité étant articulée sur le capot (2), l'axe d'articulation de la biellette (8) par laquelle l'élément élastique (5) est articulé sur le capot (2) étant distinct de l'axe d'articulation (3) du capot (2).

## Description

L'invention concerne le domaine des systèmes d'articulation du capot de véhicules automobiles.

Un souci de plus en plus présent chez les constructeurs automobiles est de prévoir sur leurs véhicules des systèmes ayant pour fonction de limiter les blessures infligées à un piéton lors d'un choc frontal. A cet effet, l'un des éléments sur lesquels on peut agir est un des mécanismes qui maintiennent le capot en place sur la carrosserie du véhicule. Il est préférable que, lors d'un choc avec un piéton, ce mécanisme se déverrouille d'une manière qui autorise l'élévation du capot.

On a, à cet effet, imaginé des systèmes dits « actifs » qui, lors d'un choc, font monter le capot, avant que celui-ci ne puisse s'affaisser. A cet effet, ils provoquent le désengagement du capot hors de ses moyens de maintien, soit au niveau de la serrure, soit au niveau de son articulation.

Le but de l'invention est de proposer un tel système dont la réalisation serait particulièrement économique.

A cet effet, l'invention a pour objet un dispositif d'absorption d'un choc subi par le capot d'un véhicule, ledit dispositif comportant des moyens pour dégager l'axe d'articulation du capot hors de son support lors de la détection d'un choc ou de l'imminence d'un choc contre le capot, caractérisé en ce qu'il comporte au moins un élément élastique qui, lorsque le capot est ouvert par l'utilisateur, sert de moyens d'assistance à cette ouverture et, après que le capot a dépassé un point d'équilibrage, entraîne la poursuite de l'ouverture puis le maintien du capot en position ouverte sans action manuelle de l'utilisateur, et qui, lorsque le capot a été éjecté hors de son support, participe à l'absorption dudit choc, une extrémité dudit élément élastique étant articulée sur la carrosserie du véhicule et l'autre extrémité étant articulée sur le capot l'axe d'articulation de la biellette par laquelle l'élément élastique est articulé sur le capot étant distinct de l'axe d'articulation du capot.

Comme on l'aura compris, l'invention consiste à intégrer à un dispositif d'absorption des chocs, du type comportant des moyens provoquant le désengagement du capot hors de son articulation, les moyens élastiques d'assistance à l'ouverture du capot qui équipent fréquemment les véhicules tout en réalisant un guidage du capot lors de son désengagement, puis de sa remise en place, par un ensemble de biellettes articulant les moyens élastique par une de leurs extrémités à la fois sur la carrosserie et sur le capot.

De plus en plus souvent, les capots de véhicules ne sont plus équipés de béquilles rigides pour leur maintien en position ouverte. Ce maintien en position ouverte est assuré par un système équilibreur comportant des moyens élastiques. Ceux-ci, dès que l'ouverture du capot imposée par l'utilisateur dépasse un certain seuil (point d'équilibrage), peuvent assurer seuls l'achèvement de l'ouverture du capot, puis son maintien en position grande ouverte.

L'intégration de ce système équilibreur au dispositif d'absorption des chocs subis par le capot, réalisée dans l'invention, permet de réaliser ledit dispositif de façon économique, puisqu'on n'ajoute qu'un minimum de pièces aux dispositifs d'articulation classiques du capot et qu'on regroupe deux fonctions dans un mécanisme unique. De plus, les moyens élastiques participent à l'absorption du choc, ce qui rend le dispositif particulièrement efficace. La présence de biellettes d'articulation, disposées conformément à l'invention, permet de fiabiliser le fonctionnement du dispositif et de faciliter la remise en place du capot.

L'invention sera mieux comprise à la lecture de la description qui suit, donnée en référence aux figures annexées suivantes :
- la figure 1 qui représente schématiquement vu de profil un premier exemple de dispositif d'absorption d'un choc, non conforme à l'invention, à différents stades de son utilisation : capot fermé (fig.1a), capot ouvert en utilisation normale (fig.1b), capot prêt à l'absorption d'un choc (fig.1c), capot reverrouillé après l'absorption d'un choc (fig.1d) ;
- la figure 2 qui représente schématiquement, et de la même façon que la figure 1, un exemple de dispositif selon l'invention.

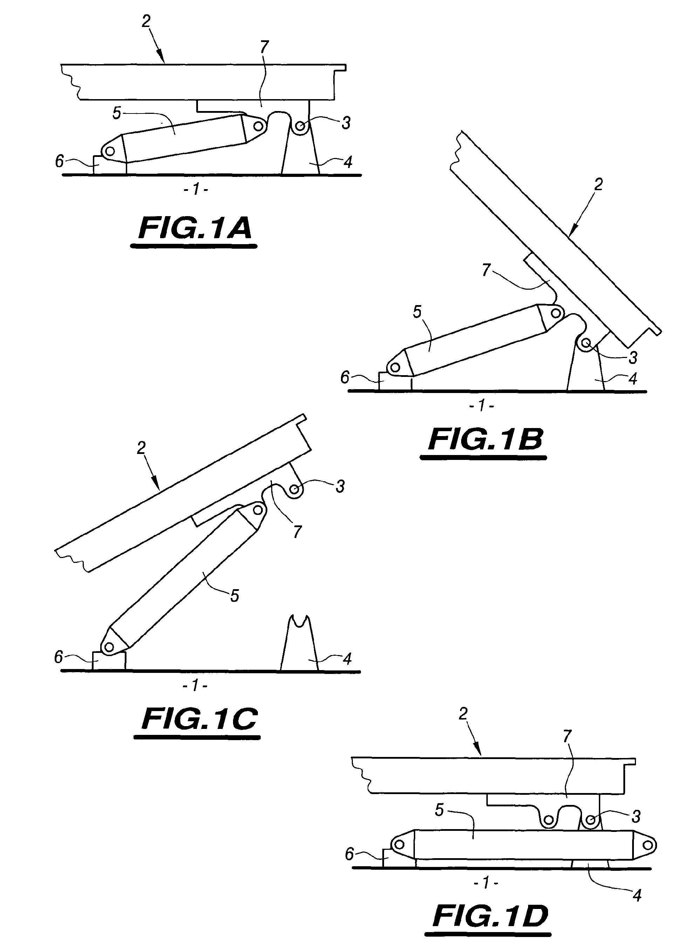

Sur la figure 1, sont représentés schématiquement la carrosserie du véhicule 1, l'extrémité du capot 2 où se trouve son axe d'articulation 3, et le support 4 solidaire de la carrosserie 1 dans lequel l'axe d'articulation est normalement maintenu lorsque le véhicule est en situation non accidentelle. Ce support 4 inclut également des moyens quelconques (non représentés) assurant le dégagement de l'axe d'articulation 3 lorsqu'un choc sur le capot 2, par exemple avec un piéton, se produit ou est sur le point de se produire. Ces moyens de dégagement sont, de manière connue, commandés par des moyens de détection dudit choc ou de l'imminence dudit choc. A l'autre extrémité (non représentée) du capot 2 se trouve, de manière classique, un fil de gâche, ou un moyen équivalent, coopérant avec une serrure fixée à la carrosserie 1 pour assurer la fermeture et l'ouverture du capot 2.

De manière connue, le véhicule est également équipé d'un dispositif d'assistance à l'ouverture et au maintien en position ouverte du capot 2, comportant un élément élastique 5 de longueur variable travaillant en extension, tel qu'un ressort hélicoïdal ou un ressort pneumatique. Cet élément élastique 5 est fixé par une de ses extrémités à un support 6 solidaire de la carrosserie 1, et peut tourner autour du point de fixation correspondant. L'autre extrémité de l'élément élastique 5 est fixée au capot 2, également de manière à pouvoir tourner autour du point de fixation correspondant. Dans cette configuration, l'élément élastique 5 tend à s'allonger en direction du support 4. Les deux supports 4, 6 sont donc placés à distance l'un de l'autre.

La figure 1a représente l'ensemble alors que le capot 2 est dans sa position fermée normale. L'élément élastique 5 est dans son état de compression maximale.

Lors de l'ouverture du capot par l'utilisateur, le fil de gâche qui se trouve à l'extrémité non représentée du capot 2 est dégagé de la serrure, et l'utilisateur fait tourner manuellement le capot 2 autour de son axe d'articulation 3. Pendant ce temps, l'élément élastique 5 assiste cette ouverture en se détendant et en s'allongeant. Lorsque l'ouverture du capot 2 a atteint un point d'équilibrage, cette ouverture peut se poursuivre sous la seule action de l'élément élastique 5. L'élément élastique 5 se retrouve finalement dans un état détendu où il équilibre le poids propre du capot 2. Le capot 2 se trouve alors maintenu dans sa position d'ouverture nominale, comme représenté sur la figure 1b.

Lorsqu'un choc d'un piéton sur le capot, ou l'imminence d'un tel choc, est détecté(e), les moyens de dégagement de l'axe d'articulation 3 du support 4 sont actionnés par un dispositif de type connu (pyrotechnique ou autre), et le capot 2 peut alors tourner autour de son fil de gâche maintenu dans la serrure, comme représenté sur la figure 1c. Lorsque le piéton percute le capot 2, le choc tend à faire revenir le capot 2 à sa position initiale, et l'élément élastique 5 contribue à l'absorption de l'énergie du choc en se comprimant. En fin d'absorption d'énergie, l'ensemble se trouve dans une position généralement proche de celle représentée sur la figure 1a (à moins que le choc n'ait provoqué une déformation importante du capot 2). Cette possibilité d'absorption d'une partie de l'énergie du choc permet d'atténuer les blessures infligées au piéton. De plus, le fait de réaliser cette absorption au moyen de l'élément élastique 5, dont la présence est déjà requise pour le maintien du capot 2 en position ouverte, évite de devoir ajouter au véhicule des organes spécialement dédiés à cette fonction d'absorption du choc. Le dispositif est donc particulièrement économique et peu encombrant.

Après le déclenchement du dispositif, si le capot 2 n'a pas ou peu été déformé (soit parce que le choc a été d'intensité faible, soit parce qu'il a pu, en définitive, être évité), il est préférable qu'avant de repartir, le conducteur puisse remettre le capot 2 dans sa position fermée normale. A cet effet plusieurs solutions sont envisageables :
- prévoir des moyens de guidage du capot 2, qui assistent le retour de l'axe d'articulation 3 dans le support 4 lorsqu'une pression est exercée sur le capot 2, en assurant une mise en compression adéquate de l'élément élastique 5;
- ou, comme représenté sur la figure 1d, prévoir des moyens permettant à l'utilisateur de désolidariser aisément l'élément élastique 5 du capot 2 ou du support 7 du capot 2 ; de cette façon, l'élément élastique 5 est mis hors service ; lors du retour du capot 2 dans sa position fermée normale, il n'est plus nécessaire à l'utilisateur de vaincre la résistance de l'élément élastique 5, et l'opération est particulièrement aisée ; en variante, on pourrait plutôt désolidariser l'élément élastique 5 du support 6 lié à la carrosserie 1 ;
- ou combiner les deux solutions précédentes.

En général, un véhicule peut être équipé de deux tels dispositifs, disposés à proximité de chaque côté du capot 2. Toutefois, pour un véhicule de petite taille et/ou comportant un capot 2 très léger, un seul dispositif placé en position centrale ou latérale pourrait être suffisant. Inversement, pour un véhicule de grande taille et/ou ayant un capot 2 relativement lourd, il peut être souhaitable d'avoir plus de deux tels dispositifs.

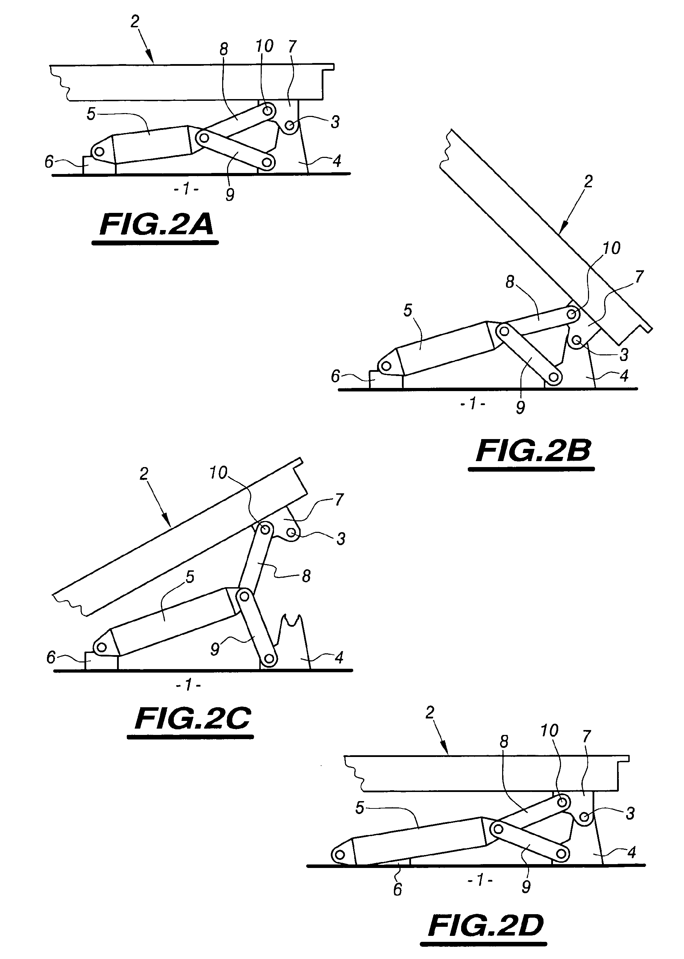

Le dispositif selon l'invention représenté sur la figure 2 est comparable au dispositif de la figure 1 dans son agencement général. Il s'en distingue essentiellement en ce que, selon l'invention :
- l'articulation de l'élément élastique 5 sur le support 7 du capot 2 s'effectue au moyen d'une première biellette 8 elle-même articulée sur ces deux éléments ;
- et en ce que l'élément élastique 5 est également connecté au support 4 par l'intermédiaire d'une deuxième biellette 9.

La présence de ce système de biellettes a pour conséquences :
- d'optimiser le fonctionnement du dispositif à la fois en équilibrage et en absorption de choc ;
- de limiter l'amplitude du débattement du capot 2 lors de l'éjection de ce dernier (voir fig. 2) ;
- et de fournir un moyen de guidage du capot 2 lors de sa remise en place.

Bien entendu, on pourrait prévoir, si utile, un plus grand nombre de biellettes.

On notera que dans l'exemple représenté fig.2, préalablement à la remise en place du capot 2 on a déconnecté l'élément élastique 5 du support 6 lié à la carrosserie 1, de façon à profiter ensuite aisément de la possibilité de guidage du capot 2 par les biellettes 8, 9. Cette façon d'opérer n'est pas obligatoire, on pourrait aussi maintenir la connexion entre l'élément élastique 5 et le support 6 pendant cette opération de remise en place du capot 2.

On précise également qu'il est nécessaire que l'axe d'articulation 10 de la première biellette 8 sur le support 7 du capot 2 soit distinct de l'axe d'articulation 3 du capot 2, pour que l'élément élastique 5 puisse être actif lors des opérations d'ouverture et de fermeture normales du capot 2.

## Revendications

1. Dispositif d'absorption d'un choc subi par le capot (2) d'un véhicule, ledit dispositif comportant des moyens pour dégager l'axe d'articulation (3) du capot (2) hors de son support (4) lors de la détection d'un choc ou de l'imminence d'un choc contre le capot (2), **caractérisé en ce qu'**il comporte au moins un élément élastique (5) qui, lorsque le capot (2) est ouvert par l'utilisateur, sert de moyens d'assistance à cette ouverture et, après que le capot (2) a dépassé un point d'équilibrage, entraîne la poursuite de l'ouverture puis le maintien du capot (2) en position ouverte sans action manuelle de l'utilisateur, et qui, lorsque le capot (2) a été éjecté hors de son support (4), participe à l'absorption dudit choc, une extrémité dudit élément élastique (5) étant articulée sur la carrosserie (1) du véhicule et l'autre extrémité étant articulée sur le capot (1), **en ce qu'**il comporte des moyens de guidage du capot (2) permettant d'assister la remise en place de l'axe d'articulation (3) dans son support (4) après un déclenchement dudit dispositif, et **en ce que** lesdits moyens de guidage sont constitués par au moins deux biellettes (8, 9) articulant une extrémité de l'élément élastique (5) à la fois sur la carrosserie (1) et sur le capot (2), l'axe d'articulation de la biellette (8) par laquelle l'élément élastique (5) est articulé sur le capot (2) étant distinct de l'axe d'articulation (3) du capot (2).
